# EUROPEAN PATENT APPLICATION

(11) **EP 4 471 543 A1**
(43) Date of publication of application: **04.12.2024**
(21) Application number: 24178682.1
(22) Date of filing: 29.05.2024
(51) Int. Cl.: G06F 3/01, G02B 27/01, G06T 19/00, G02B 27/00

(54) **LATE-STAGE WARP OF DYNAMIC-ANCHORED CONTENT**

(30) Priority: 02.06.2023 US 202363470662 P
(71) Applicant: Apple Inc., Cupertino, CA 95014 (US)
(72) Inventor: BROOKS, Connor J., Cupertino, 95014 (US); MIRHOSSEINI, Seyedkoosha, Santa Clara (US)
(74) Representative: COPA Copenhagen Patents

(57) **Abstract**

In one implementation, a method of displaying an image is performed by a device including an image sensor, a display, one or more processors, and non-transitory memory. The method includes capturing, using the image sensor, an image of an object in a physical environment. The method includes obtaining, based on the image, a first predicted object pose of the object in the physical environment at a display time. The method includes rendering virtual content based on the first predicted object pose. The method includes obtaining a second predicted object pose of the object in the physical environment at the display time. The method includes warping the virtual content based on the second predicted object pose. The method includes displaying, on the display at the display time, the warped virtual content.

## Description

### CROSS-REFERENCE TO RELATED APPLICATIONS

This application claims priority to U.S. Provisional Patent App. No. 63/470,662, filed on June 2, 2023, which is hereby incorporated by reference in its entirety.

### TECHNICAL FIELD

The present disclosure generally relates to systems, methods, and devices of rendering virtual content anchored to a real-world object.

### BACKGROUND

In various implementations, an extended reality (XR) environment presented by an electronic device including a display includes world-locked content (which moves on the display when the pose of the electronic device changes) and display-locked content (which maintains its location on the display when the pose of the electronic device changes). Further, some world-locked content is anchored to a static object, such as a virtual cylinder displayed on a real table and some world-locked content is anchored to a dynamic object, such as a virtual mask displayed on the face of a person.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figure 1 is a block diagram of an example operating environment in accordance with some implementations.
Figures 2A-2E illustrate an XR environment during various time periods in accordance with some implementations.
Figure 3 illustrates an electronic device in accordance with some implementations.
Figure 4 is a flowchart representation of a method of displaying an image in accordance with some implementations.
Figure 5 is a flowchart representation of another method of displaying an image in accordance with some implementations.
Figure 6 is a flowchart representation of a method of extrapolating an image in accordance with some implementations.
Figure 7 is a flowchart representation of another method of extrapolating an image in accordance with some implementations.
Figure 8 is a block diagram of an example controller in accordance with some implementations.
Figure 9 is a block diagram of an example electronic device in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### SUMMARY

Various implementations disclosed herein include devices, systems, and methods for displaying an image. In various implementations, the method is performed by a device including an image sensor, a display, one or more processors, and non-transitory memory. The method includes capturing, using the image sensor, an image of an object in a physical environment. The method includes obtaining, based on the image, a first predicted object pose of the object in the physical environment at a display time. The method includes rendering virtual content based on the first predicted object pose. The method includes obtaining a second predicted object pose of the object in the physical environment at the display time. The method includes warping the virtual content based on the second predicted object pose. The method includes displaying, on the display at the display time, the warped virtual content.

Various implementations disclosed herein include devices, systems, and methods for displaying an image. In various implementations, the method is performed by a device including a display, one or more processors, and non-transitory memory. The method includes obtaining a first predicted device pose of the device at a display time and a first predicted object pose of an object at the display time. The method includes rendering virtual content based on the first predicted device pose and the first predicted object pose. The method includes obtaining a second predicted device pose of the device at the display time and a second predicted object pose of the object at the display time. The method includes warping the virtual content based on the second predicted device pose and the second predicted object pose. The method includes displaying, on the display at the display time, the warped virtual content.

Various implementations disclosed herein include devices, systems, and methods for extrapolating an image. In various implementations, the method is performed by a device including an image sensor, a display, one or more processors, and non-transitory memory. The method includes capturing, using the image sensor, an image of an object in a physical environment. The method includes obtaining, based on the image, a first predicted object pose of the object at a first display time. The method includes rendering virtual content based on the first predicted object pose. The method includes displaying, at the first display time, the virtual content. The method includes obtaining a second predicted object pose of the object at a second display time subsequent to the first display time. The method includes warping the virtual content based on the second predicted object pose. The method includes displaying, at the second display time, the warped virtual content.

Various implementations disclosed herein include devices, systems, and methods for extrapolating an image. In various implementations, the method is performed by a device including a display, one or more processors, and non-transitory memory. The method includes obtaining a first predicted device pose of the device at a first display time and a first predicted object pose of an object at the first display time. The method includes rendering virtual content based on the first predicted device pose and the first predicted object pose. The method includes displaying, on the display at the first display time, the virtual content. The method includes obtaining a second predicted device pose of the device at a second display time and a second predicted object pose of the object at the second display time. The method includes warping the virtual content based on the second predicted device pose and the second predicted object pose. The method includes displaying, on the display at the second display time, the warped virtual content.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

As noted above, in various implementations, some world-locked content is anchored to a dynamic object, such as a virtual mask displayed on the face of a person. Determining the location on the display to display the dynamic-anchored world-locked content is based on the pose of the dynamic object. Accurately predicting this pose is important to registration of the virtual content. After rendering has begun, a more accurate pose may be available. Accordingly, in various implementations, the rendered content is shifted (or otherwise warped) based on the updated pose.

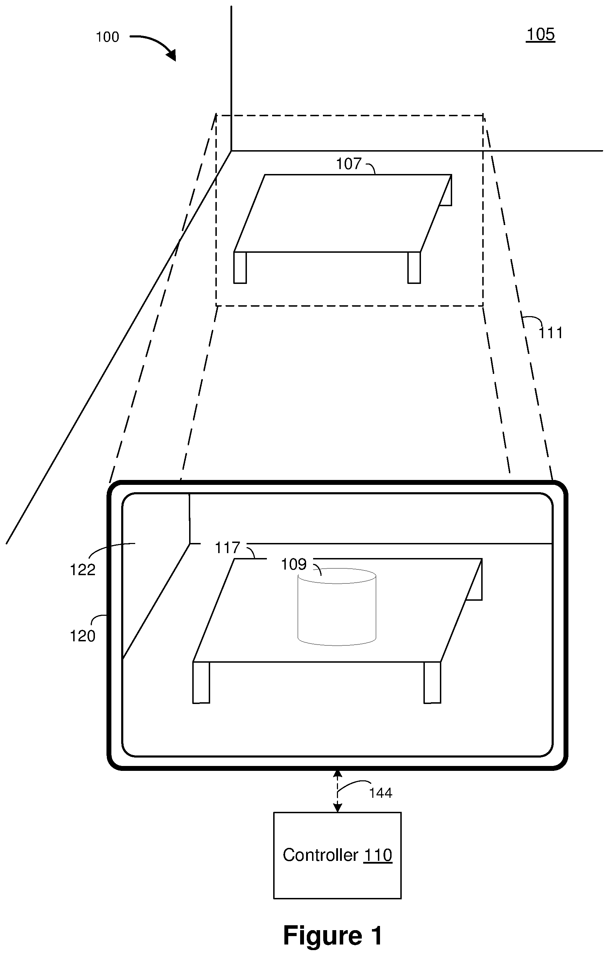

Figure 1 is a block diagram of an example operating environment 100 in accordance with some implementations. While pertinent features are shown, those of ordinary skill in the art will appreciate from the present disclosure that various other features have not been illustrated for the sake of brevity and so as not to obscure more pertinent aspects of the example implementations disclosed herein. To that end, as a non-limiting example, the operating environment 100 includes a controller 110 and an electronic device 120.

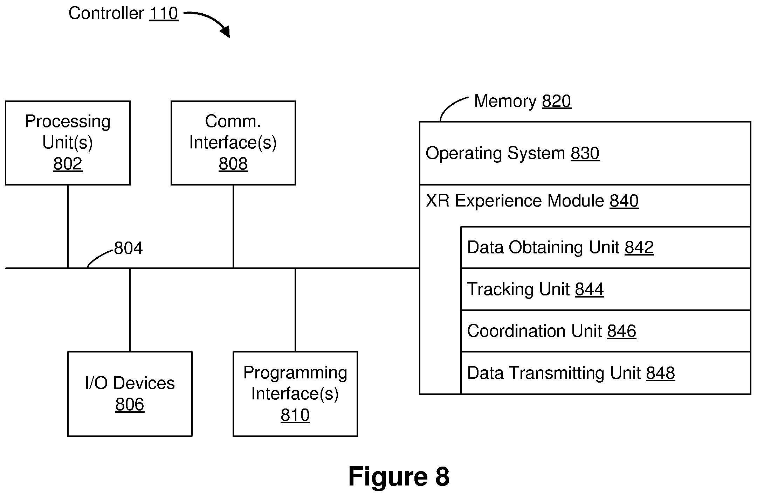

In some implementations, the controller 110 is configured to manage and coordinate an XR experience for the user. In some implementations, the controller 110 includes a suitable combination of software, firmware, and/or hardware. The controller 110 is described in greater detail below with respect to Figure 8. In some implementations, the controller 110 is a computing device that is local or remote relative to the physical environment 105. For example, the controller 110 is a local server located within the physical environment 105. In another example, the controller 110 is a remote server located outside of the physical environment 105 (e.g., a cloud server, central server, etc.). In some implementations, the controller 110 is communicatively coupled with the electronic device 120 via one or more wired or wireless communication channels 144 (e.g., BLUETOOTH, IEEE 802.11x, IEEE 802.16x, IEEE 802.3x, etc.). In another example, the controller 110 is included within the enclosure of the electronic device 120. In some implementations, the functionalities of the controller 110 are provided by and/or combined with the electronic device 120.

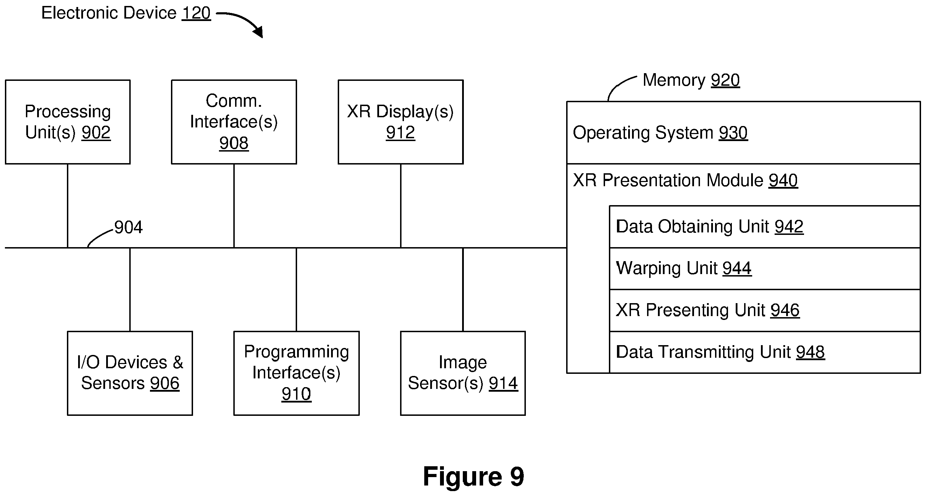

In some implementations, the electronic device 120 is configured to provide the XR experience to the user. In some implementations, the electronic device 120 includes a suitable combination of software, firmware, and/or hardware. According to some implementations, the electronic device 120 presents, via a display 122, XR content to the user while the user is physically present within the physical environment 105 that includes a table 107 within the field-of-view 111 of the electronic device 120. As such, in some implementations, the user holds the electronic device 120 in his/her hand(s). In some implementations, while providing XR content, the electronic device 120 is configured to display an XR object (e.g., an XR cylinder 109) and to enable video pass-through of the physical environment 105 (e.g., including a representation 117 of the table 107) on a display 122. The electronic device 120 is described in greater detail below with respect to Figure 9.

According to some implementations, the electronic device 120 provides an XR experience to the user while the user is virtually and/or physically present within the physical environment 105.

In some implementations, the user wears the electronic device 120 on his/her head. For example, in some implementations, the electronic device includes a head-mounted system (HMS), head-mounted device (HMD), or head-mounted enclosure (HME). As such, the electronic device 120 includes one or more XR displays provided to display the XR content. For example, in various implementations, the electronic device 120 encloses the field-of view of the user. In some implementations, the electronic device 120 is a handheld device (such as a smartphone or tablet) configured to present XR content, and rather than wearing the electronic device 120, the user holds the device with a display directed towards the field-of view of the user and a camera directed towards the physical environment 105. In some implementations, the handheld device can be placed within an enclosure that can be worn on the head of the user. In some implementations, the electronic device 120 is replaced with an XR chamber, enclosure, or room configured to present XR content in which the user does not wear or hold the electronic device 120.

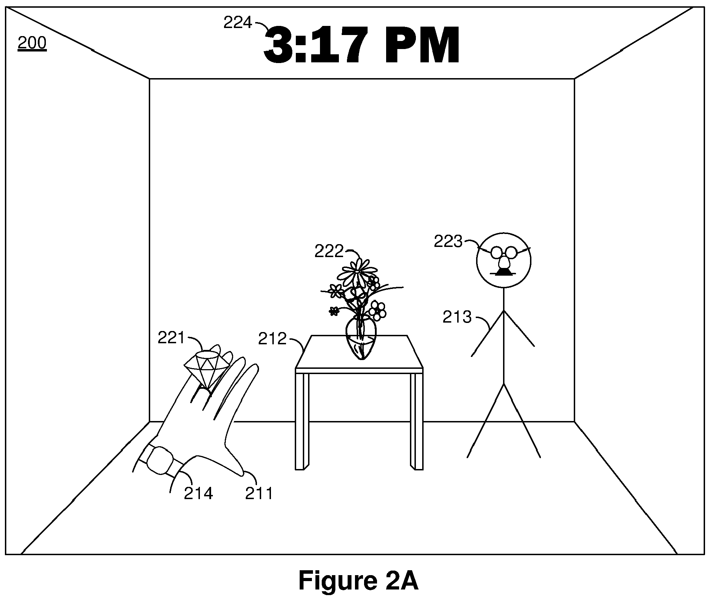

Figures 2A-2E illustrate an XR environment 200 from the perspective of a user of an electronic device displayed, at least in part, by a display of the electronic device. In various implementations, the perspective of the user is from a location of an image sensor of the electronic device. For example, in various implementations, the electronic device is a handheld electronic device and the perspective of the user is from a location of the image sensor of the handheld electronic device directed towards the physical environment. In various implementations, the perspective of the user is from the location of a user of the electronic device. For example, in various implementations, the electronic device is a head-mounted electronic device and the perspective of the user is from a location of the user directed towards the physical environment, generally approximating the field-of view of the user were the head-mounted electronic device not present. In various implementations, the perspective of the user is from the location of an avatar of the user. For example, in various implementations, the XR environment 200 is a virtual environment and the perspective of the user is from the location of an avatar or other representation of the user directed towards the virtual environment.

In a particular implementation, the electronic device is a head-mounted device with a transparent display. Thus, the XR environment includes a real environment (which the user views through the transparent display) with virtual objects (displayed by the transparent display) superimposed over the real environment. Further, being head-mounted, the pose of the electronic device (e.g., its position and/or orientation) is changed as the user changes the pose of the user's head.

Figures 2A-2E illustrate the XR environment 200 during a series of time periods. In various implementations, each time period is an instant, a fraction of a second, a few seconds, a few hours, a few days, or any length of time.

The XR environment 200 includes a plurality of objects, including one or more real objects (e.g., a hand 211 of the user, a table 212, a person 213 other than the user, and a smartwatch 214 worn by the user) and one or more virtual objects (e.g., a virtual ring 221, virtual flowers 222, virtual glasses 223, and a virtual clock 224). In various implementations, certain objects (such as the virtual ring 221, the virtual flowers 222, and the virtual glasses 223) are displayed at a location in the XR environment 200, e.g., at a location defined by three coordinates in a three-dimensional (3D) XR coordinate system. Accordingly, when the electronic device moves in the XR environment 200 (e.g., changes either position and/or orientation), the objects are moved on the display of the electronic device, but retain their (possibly time-dependent) location in the XR environment 200. Such virtual objects that, in response to motion of the electronic device, move on the display, but retain their position in the XR environment 200 are referred to as world-locked objects. In various implementations, certain virtual objects (such as the virtual clock 224) are displayed at locations on the display such that when the electronic device moves in the XR environment 200, the objects are stationary on the display on the electronic device. Such virtual objects that, in response to motion of the electronic device, retain their location on the display are referred to as headlocked objects or display-locked objects.

Some world-locked objects are anchored to stationary objects and may be referred to as static-anchored world-locked objects. For example, the virtual flowers 222 are displayed as being on the table 212. However, some world-locked objects are anchored to dynamic (or moving) objects and may be referred to as dynamic-anchored world-locked objects. For example, the virtual ring 221 is displayed as being worn on the hand 211 of the user. Thus, as the hand 211 of the user moves in the XR environment 200, the virtual ring 221 moves on the display. As another example, the virtual glasses 223 are displayed as being worn on the face of the person 213. Thus, as the person 213 moves in the XR environment, the virtual glasses 223 move on the display.

Figure 2A illustrates the XR environment 200 during a first time period. During the first time period, the electronic device displays the virtual ring 221 at a first ring location on the display corresponding to, for a first pose of the electronic device and a first pose of the hand 211, a first ring location in the XR environment 200, e.g., a location on the hand 211 while the hand 211 has the first pose. During the first time period, the electronic device displays the virtual flowers 222 at a first flowers location on the display corresponding to, for the first pose of the electronic device, a flowers location in the XR environment 200, e.g., a location on the table 212. During the first time period, the electronic device displays the virtual glasses 223 at a first glasses location on the display corresponding to, for the first pose of the electronic device and a first pose of the person 213, a first glasses location in the XR environment 200, e.g., a location on the person 213 while the person 213 has the first pose. During the first time period, the electronic device displays the virtual clock 224 and a fixed clock location on the display.

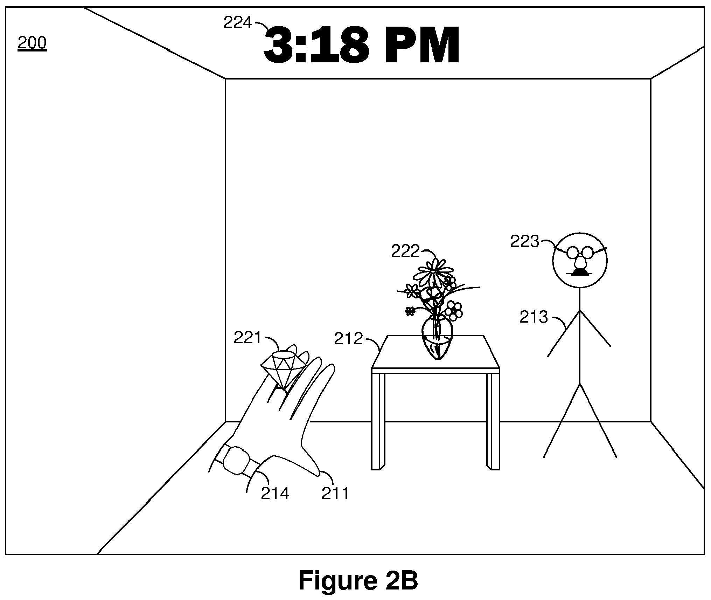

Figure 2B illustrates the XR environment 200 during a second time period subsequent to the first time period. During the second time period, as compared to the first time period, the pose of the electronic device has changed from the first pose to a second pose. In particular, the electronic device has moved to the left. During the second time period, as compared to the first time period, the pose of the hand 211 and the pose of the person 213 has not changed.

During the second time period, the electronic device displays the virtual ring 221 at a second ring location on the display corresponding to, for the second pose of the electronic device and the first pose of the hand 211, the first hand location in the XR environment 200. During the second time period, the electronic device displays the virtual flowers 222 at a second flowers location on the display corresponding to, for the second pose of the electronic device, the flowers location in the XR environment 200. During the second time period, the electronic device displays the virtual glasses 223 at a second glasses location on the display corresponding to, for the second pose of the electronic device and the first pose of the person 213, the first person location in the XR environment 200. During the second time period, the electronic device displays the virtual clock 224 at the fixed clock location on the display.

Thus, during the second time period as compared to the first time period, the world-locked objects (e.g., the virtual ring 221, the virtual flowers 222, and the virtual glasses 223) have moved to the right on the display due to the electronic device moving to the left in the XR environment 200.

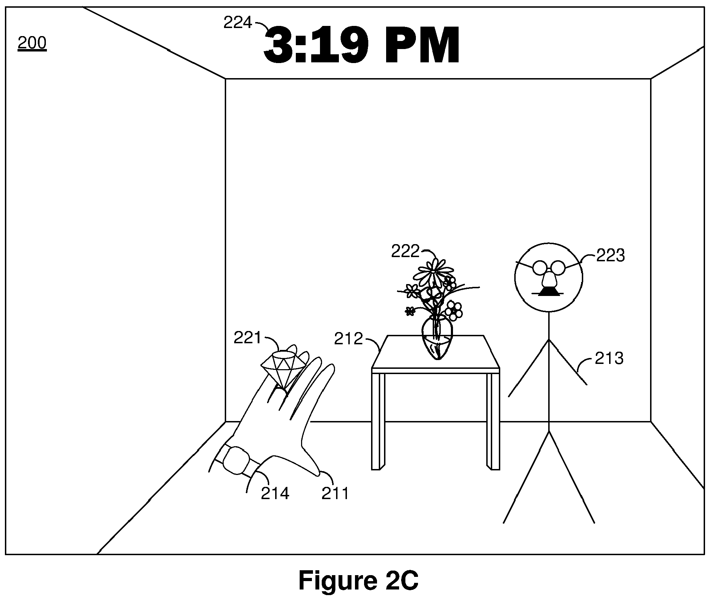

Figure 2C illustrates the XR environment 200 during a third time period subsequent to the second time period. During the third time period, as compared to the second time period, the pose of the electronic device and the pose of the hand 211 has not changed. During the third time period, as compared to the second time period, the pose of the person 213 has changed from the first pose to a second pose. In particular, the person 213 has moved closer to the electronic device.

During the third time period, the electronic device displays the virtual ring 221 at a second ring location on the display corresponding to, for the second pose of the electronic device and the first pose of the hand 211, the first hand location in the XR environment 200. During the third time period, the electronic device displays the virtual flowers 222 at the second flowers location on the display corresponding to, for the second pose of the electronic device, the flowers location in the XR environment 200. During the third time period, the electronic device displays the virtual glasses 223 at a third glasses location on the display corresponding to, for the second pose of the electronic device and the second pose of the person 213, the second person location in the XR environment 200. During the third time period, the electronic device displays the virtual clock 224 at the fixed clock location on the display.

Thus, during the third time period as compared to the second time period, the virtual glasses 223 have enlarged and moved down on the display due to the person 213 moving closer to the electronic device in the XR environment 200.

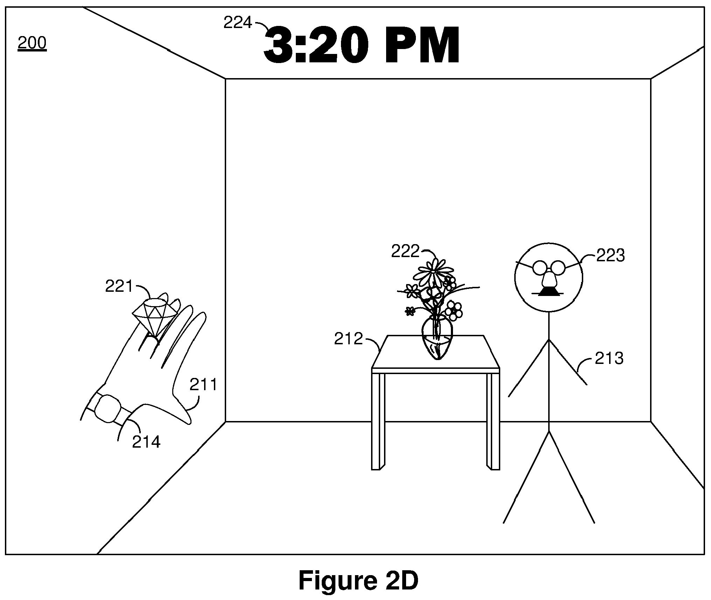

Figure 2D illustrates the XR environment 200 during a fourth time period subsequent to the third time period. During the fourth time period, as compared to the third time period, the pose of the electronic device and the pose of the person 213 has not changed. During the fourth time period, as compared to the third time period, the pose of the hand 211 has changed from the first pose to a second pose. In particular, the hand 211 has moved to the left in the XR environment 200.

During the fourth time period, the electronic device displays the virtual ring 221 at a third ring location on the display corresponding to, for the second pose of the electronic device and the second pose of the hand 211, the second hand location in the XR environment 200. During the fourth time period, the electronic device displays the virtual flowers 222 at the second flowers location on the display corresponding to, for the second pose of the electronic device, the flowers location in the XR environment 200. During the fourth time period, the electronic device displays the virtual glasses 223 at the third glasses location on the display corresponding to, for the second pose of the electronic device and the second pose of the person 213, the second person location in the XR environment 200. During the fourth time period, the electronic device displays the virtual clock 224 at the fixed clock location on the display.

Thus, during the fourth time period as compared to the third time period, the virtual ring 221 has moved left on the display due to the hand 211 moving left in the XR environment 200.

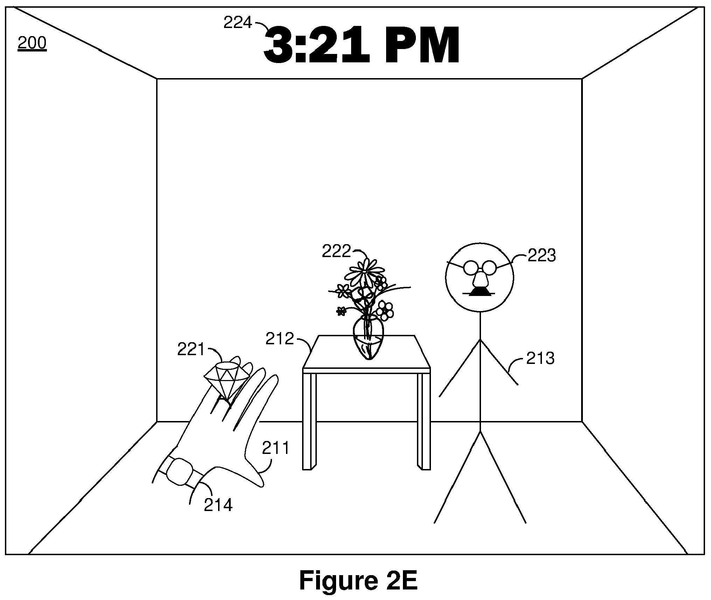

Figure 2E illustrates the XR environment 200 during a fifth time period subsequent to the fourth time period. During the fifth time period, as compared to the fourth time period, the pose of the person 213 has not changed. During the fifth time period, as compared to the fourth time period, the pose of the hand 211 has changed from the second pose to a third pose. In particular, the hand 211 has moved to the right in the XR environment 200. Further, during the fifth time period, as compared to the fourth time period, the pose of the electronic device has changed from the second pose to a third pose. In particular, the electronic device has moved to the right in the XR environment 200.

During the fifth time period, the electronic device displays the virtual ring 221 at a fourth ring location on the display corresponding to, for the third pose of the electronic device and the third pose of the hand 211, the third hand location in the XR environment 200. During the fifth time period, the electronic device displays the virtual flowers 222 at a third flowers location on the display corresponding to, for the third pose of the electronic device, the flowers location in the XR environment 200. During the fifth time period, the electronic device displays the virtual glasses 223 at a fourth glasses location on the display corresponding to, for the third pose of the electronic device and the second pose of the person 213, the second person location in the XR environment 200. During the fifth time period, the electronic device displays the virtual clock 224 at the fixed clock location on the display.

Thus, during the fifth time period as compared to the fourth time period, the world-locked objects (e.g., the virtual ring 221, the virtual flowers 222, and the virtual glasses 223) have moved to the left on the display due to the electronic device moving to the right in the XR environment 200. However, the virtual ring 221 is not moved to the left as much as the other world-locked objects due to the hand 211 also moving to the right in the XR environment 200.

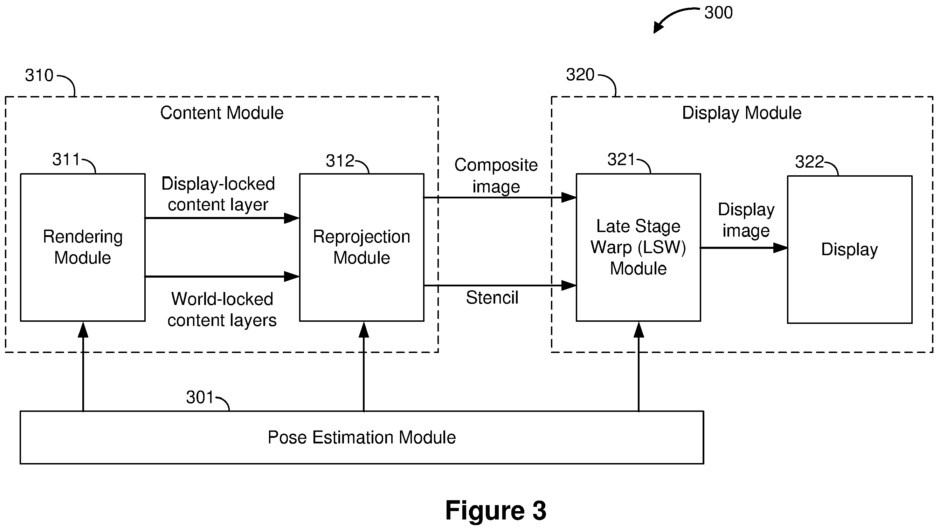

Figure 3 illustrates an electronic device 300 in accordance with some implementations. The electronic device 300 is present in a physical environment. The electronic device 300 includes a pose estimation module 301 that determines a current pose of the electronic device in the physical environment and determines a predicted pose of the electronic device at future times. Further, the pose estimation module 201 determines a current pose of one or more dynamic objects in the physical environment and determines a predicted pose of the one or more dynamic objects at future times. For example, in various implementations, the pose estimation module 301 determines a current pose and a predicted pose of a hand of a user. In various implementations, the pose estimation module 301 determines a current pose and predicted pose of the face of a person (other than the user). In various implementations, the pose estimation module 301 determines the current pose of the electronic device 300 based on camera-based pose tracking and/or IMU (inertial measurement unit) tracking. In various implementations, the pose estimation module 301 determines the predicted pose of the electronic device 300 by extrapolating previous motion of the electronic device 300, e.g., current speed and/or acceleration of the electronic device 300.

In various implementations, the pose estimation module 301 determines the current pose of the one or more objects based on an image of the physical environment. For example, in various implementations, the pose estimation module 301 determines the current pose of the hand of the user based on a hand tracking algorithm applied to an image of the physical environment. In various implementations, the pose estimation module 301 determines the current pose of the face of the person based on a face detection algorithm applied to an image of the physical environment. In various implementations, the pose estimation module 301 determines the current pose of the one or more objects based on an IMU attached to the object. For example, in various implementations, the pose estimation module 301 determines the current pose of the hand of the user based on IMU data received from a watch worn by the user. As another example, in various implementations, the pose estimation module 301 determines the current pose of the hand of the user based on IMU data received from a stylus held by the user. As another example, in various implementations, the pose estimation module 301 determines the current pose of the face of the person based on IMU data received from a head-mounted device worn by the person. In various implementations, the pose estimation module 301 determines the predicted pose of the one or more objects by extrapolating previous motion of the one or more objects, e.g., current speed and/or acceleration of the one or more obj ects.

The electronic device 300 includes a content module 310 that generates images at a display frame rate based on the pose information from the pose estimation module 301 and further includes a display module 320 that displays the images at the display frame rate.

The content module 310 includes a rendering module 311 that generates rendered images at a rendering frame rate based on pose information from the pose estimation module 301. In various implementations, the rendering frame rate is approximately equal to the display frame rate. In various implementations, the rendering frame rate is less than the display frame rate. For example, in various implementations, the rendering frame rate is half the display frame rate.

In various implementations, the rendered images each include a display-locked content layer including display-locked content that is rendered independent of the pose information from the pose estimation module 301 and one or more world-locked content layers including world-locked content that is rendered based on the pose information from the pose estimation module 301. In various implementations, the world-locked content layers include a static-anchored world-locked content layer that is rendered based on device pose information of the electronic device 300 and independent of any other pose information and a layer for each dynamic object being tracked by the pose prediction module 301.

As an example, the rendering module 311 generates, at a first time period prior to a first display time period of a first display image, a first rendered image based on a first predicted pose of the electronic device 300 during the first display time period and a first predicted pose of the one or more objects from the pose estimation module 301. The first rendered image includes a display-locked content layer, a static-anchored world-locked content layer, and one or more dynamic-anchored world-locked content layers.

The content module 310 includes a reprojection module 312 that generates composite images at the display frame rate based on updated pose information from the pose estimation module 301. In various implementations, the reprojection module 312 generates the composite images by transforming the world-locked content layers of rendered images based on pose information from the pose estimation module 301 and flattening the rendered images into a single layer. In various implementations, the reprojection module 312 transforms each world-locked content layer by applying a homographic transformation to the world-locked content layer. In various implementations, the reprojection module 312 transforms each world-locked content layer using one or more other perspective transformations.

As an example, the reprojection module 312 generates, at a second time period after the first time period and prior to the first display time period of the first display image, a first composite image based on a second predicted pose of the electronic device 300 during the first display time period and a second predicted pose of the one or more objects from the pose estimation module 301. In various implementations, the reprojection module 312 generates the first composite image by transforming the static-anchored world-locked content layer of the first rendered image based on the second predicted pose of the electronic device 300 and transforming the one or more dynamic-anchored world-locked content layers of the first rendered image based on the second predicted pose of the electronic device and the second predicted pose of the one or more objects. The pose estimation module 301 generates the second predicted pose after generating the first predicted pose. The second predicted pose, being generated closer in time to the first display time period than the first predicted pose, is more accurate than the first predicted pose.

The reprojection module 312 further generates, for each composite image, a stencil indicating how portions of the composite image are to be warped by the late-stage warp (LSW) module 321 described further below.

In various implementations, the stencil includes a matrix of the same resolution of the composite image, each element of the matrix corresponding to a pixel of the composite image. In various implementations, each element of the matrix has a value of '0' if the corresponding pixel of the composite image is not to be warped by the LSW module 321, a value of ` 1' if the corresponding pixel of the composite image is to be warped by the LSW module 321 based only on the pose of the electronic device 300, a value of '2' if the corresponding pixel of the composite image is to be warped by the LSW module 321 based on the pose of the electronic device 300 and the pose of a first dynamic object, a value of '3' if the corresponding pixel of the composite image is to be warped by the LSW module 321 based on the pose of the electronic device 300 and the pose of a second dynamic object, etc.

For example, pixels in the composite image corresponding to display-locked content have a value of `0', pixels in the composite image corresponding to static-anchored world-locked content have a value of '1', pixels in the composite image corresponding to dynamic-anchored world-locked content anchored to, e.g., a hand of a user, have a value of `2', and pixels in the composite image corresponding to dynamic-anchored world-locked content anchored to, e.g., a face of a person, have a value of '3'.

The stencil may be defined in ways other than a matrix. For example, in various implementations, the stencil includes pixel coordinates indicating regions that are to be shifted by the LSW module 321, such as the corners of a rectangle surrounding a region to be shifted by the LSW module 321.

The display module 320 includes the LSW module 321 that generates display images at the display frame rate based on updated pose information from the pose estimation module 301. In various implementations, the LSW module 321 performs a one-dimensional or two-dimensional pixel shift of portions of the composite images indicated by the corresponding stencil based on updated pose information from the pose estimation module 301.

As an example, the LSW module 321 generates, at a third time period after the second time period and prior to the first display time period of the first display image, the first display image based on a third predicted pose of the electronic device 300 during the first display time period and a third predicted pose of the one or more objects from the pose estimation module 301. In various implementations, the LSW module 321 generates the first display image by shifting portions of the first composite image indicated by the stencil as corresponding to static-anchored world-locked content based on the third predicted pose of the electronic device 300 and shifting portions of the first composite image indicated by the stencil as corresponding to dynamic-anchored world-locked content based on the third predicted pose of the electronic device 300 and the third predicted pose of the one or more objects. The pose estimation module 301 generates the third predicted pose after generating the second predicted pose. The third predicted pose, being generated closer in time to the first display time period than the second predicted pose, is more accurate than the second predicted pose.

The display 322 displays the display images at the display frame rate. As an example, the display 322 displays the first display image at the first display time period.

As noted above, in various implementations, the display frame rate is greater than the rendering frame rate. To achieve this, in various implementations, the reprojection module 312 performs frame rate extrapolation.

As an example, the reprojection module 312 generates, at a first time period prior to a second display time period of a second display image, a second composite image based on the first rendered image, a first predicted pose of the electronic device 300 during the second display time period from the pose estimation module 301, and a first predicted pose of the one or more objects from the pose estimation module 301. In various implementations, the reprojection module 312 generates the second composite image by transforming the world-locked content layers of the first rendered image based on the first predicted pose of the electronic device and the first predicted pose of the one or more objects and compositing the transformed world-locked content layers and the display-locked content layer into a single layer. The LSW module 321 generates, at a second time period after the first time period and prior to the second display time period of the second display image, the second display image based on a second predicted pose of the electronic device 300 during the second display time period and a second predicted pose of the one or more objects from the pose estimation module 301. In various implementations, the LSW module 321 generates the second display image by shifting portions of the second composite image indicated by the stencil as corresponding to static-anchored world-locked content based on the second predicted pose of the electronic device 300 and shifting portions of the second composite image indicated by the stencil as corresponding to dynamic-anchored world-locked content based on the third predicted pose of the electronic device 300 and the third predicted pose of the one or more objects. The display 322 displays the second display image at the second display time period.

In various implementations, the rendering frame rate is substantially equal to the display frame rate. Thus, in various implementations, the electronic device 300 does not include a reprojection module 312 and the rendering module 311 outputs a composite image.

As an example, referring to Figure 2A, at a first time prior to the first time period of Figure 2A, the rendering module 311 renders a display-locked content layer including the virtual clock 224. The rendering module 311 renders a static-anchored world-locked content layer including the virtual flowers 222 based on a first prediction of the first pose of the electronic device 300. The rendering module 311 renders a first dynamic-anchored world-locked content layer including the virtual ring 221 based on the first prediction of the first pose of the electronic device 300 and a first prediction of the first pose of the hand 211. The rendering module 311 renders a second dynamic-anchored world-locked content layer including the virtual glasses 223 based on the first prediction of the first pose of the electronic device 300 and a first prediction of the first pose of the person.

At a second time subsequent to the first time but before the first time period of Figure 2A, the reprojection module 312 transforms the static-anchored world-locked content layer based on a second prediction of the first pose of the electronic device 300. The reprojection module 312 transforms the first dynamic-anchored world-locked content layer based on the second prediction of the first pose of the electronic device 300 and a second prediction of the first pose of the hand 211. The reprojection module 312 transforms the second dynamic-anchored world-locked content layer based on the second prediction of the first pose of the electronic device 300 and a second prediction of the pose of the person 213.

The reprojection module 312 flattens the transformed world-locked content layers and the display-locked content layer into a composite image. Further, the reprojection module 312 generates a stencil that includes a value of '0' at the pixel locations of the virtual clock 224, a value of ` 1' at the pixel locations of the virtual flowers 222, a value of '2' at the pixel locations of the virtual ring 221, and a value of '3' at the pixel locations of the virtual glasses 223.

At a third time subsequent to the second time but before the first time period of Figure 2A, the LSW module 321 warps the pixels of the composite image having corresponding stencil values of ` 1' based on a third prediction of the first pose of electronic device 300. The LSW module 321 warps the pixels of the composite image having corresponding stencil values of '2' based on the third prediction of the first pose of the electronic device 300 and a third prediction of the first pose of the hand 211. The LSW module 321 warps the pixels of the composite image having corresponding stencil values of '3' based on the third prediction of the first pose of the electronic device 300 and a third prediction of the first pose of the person 213.

During the first time period of Figure 2A, the display 322 displays the warped composite image, e.g., the display image.

As an example excluding use of the reprojection module 312, referring to Figure 2A, at a first time prior to the first time period of Figure 2A, the rendering module 311 renders a display-locked content layer including the virtual clock 224. The rendering module 311 renders a static-anchored world-locked content layer including the virtual flowers 222 based on a first prediction of the first pose of the electronic device 300. The rendering module 311 renders a first dynamic-anchored world-locked content layer including the virtual ring 221 based on the first prediction of the first pose of the electronic device 300 and a first prediction of the first pose of the hand 211. The rendering module 311 renders a second dynamic-anchored world-locked content layer including the virtual glasses 223 based on the first prediction of the first pose of the electronic device 300 and a first prediction of the first pose of the person.

The rendering module 311 flattens the world-locked content layers and the display-locked content layer into a composite image and generates a stencil that includes a value of '0' at the pixel locations of the virtual clock 224, a value of '1' at the pixel locations of the virtual flowers 222, a value of '2' at the pixel locations of the virtual ring 221, and a value of '3' at the pixel locations of the virtual glasses 223.

At a second time subsequent to the first time but before the first time period of Figure 2A, the LSW module 321 warps the pixels of the composite image having corresponding stencil values of '1' based on a second prediction of the first pose of electronic device 300. The LSW module 321 warps the pixels of the composite image having corresponding stencil values of `2' based on the second prediction of the first pose of the electronic device 300 and a second prediction of the first pose of the hand 211. The LSW module 321 warps the pixels of the composite image having corresponding stencil values of '3' based on the second prediction of the first pose of the electronic device 300 and a second prediction of the first pose of the person 213.

During the first time period of Figure 2A, the display 322 displays the warped composite image, e.g., the display image.

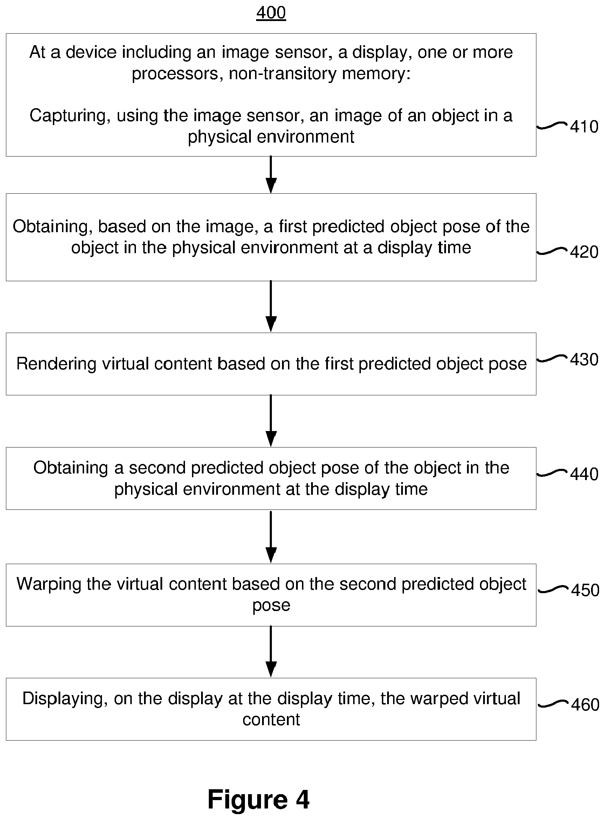

Figure 4 is a flowchart representation of a method 400 of displaying an image in accordance with some implementations. In various implementations, the method 400 is performed by an electronic device, such as the electronic device 120 of Figure 1 or the electronic device 300 of Figure 3. In various implementations, the method 400 is performed by a device with an image sensor, a display, one or more processors, and non-transitory memory. In some implementations, the method 400 is performed by processing logic, including hardware, firmware, software, or a combination thereof. In some implementations, the method 400 is performed by a processor executing instructions (e.g., code) stored in a non-transitory computer-readable medium (e.g., a memory).

The method 400 begins, in block 410, with the device capturing, using the image sensor, an image of an object in a physical environment. In various implementations, the object is a dynamic object in the physical environment. In various implementations, the object is a hand of a user of the device. In various implementations, the object is the face of a person (other than the user of the device).

The method 400 continues, in block 420, with the device obtaining, based on the image, a first predicted object pose of the object in the physical environment at a display time. In various implementations, obtaining the first predicted object pose includes performing a hand tracking algorithm on the image. In various implementations, obtaining the first predicted object pose includes performing a face detection algorithm on the image. In various implementations, obtaining the first predicted object pose is based on the image and previously obtained images. Thus, in various implementations, obtaining the first predicted object pose includes determining a current object pose at various times based on the previously obtained images and the image and extrapolating the current object poses to predict the first predicted object pose at the display time.

The method 400 continues, in block 430, with the device rendering virtual content based on the first predicted object pose. In various implementations, the method 400 further includes obtaining a first predicted device pose of the device in the physical environment at the first display time. In various implementations, rendering the virtual content is further based on the first predicted device pose.

The method 400 continues, in block 440, with the device obtaining a second predicted object pose of the object in the physical environment at the display time. In various implementations, obtaining the second predicted object pose is performed after rendering the virtual content or at least after rendering the virtual content has begun.

In various implementations, obtaining the second predicted object pose is based on an additional image. For example, in various implementations, obtaining the second predicted object pose includes determining a current object pose at various times based on the previously obtained images, the image, and the additional image and extrapolating the current object poses to predict the second predicted object pose at the display time.

In various implementations, the image is captured at a first capture rate and the additional image is captured at a second capture rate higher than the first capture rate. In various implementations, the additional image has a lower resolution than the image.

In various implementations, obtaining the second predicted object pose is based on data received from an inertial measurement unit (IMU). For example, in various implementations, the data is received from the IMU of a watch worn by the user. As another example, in various implementations, the data is received from the IMU of a stylus held by the user. As another example, in various implementations, the data is received from the IMU of a head-mounted device worn by the person (other than the user). In various implementations, the image is captured at a capture rate and the data is received at a reception rate higher than the capture rate.

The method 400 continues, in block 450, with the device warping the virtual content based on the second predicted object pose. In various implementations, the method 400 includes obtaining a second predicted device pose of the device at the display time and warping the virtual content is further based on the second predicted device pose. In various implementations, obtaining the second predicted device pose is based on data received from an inertial measurement unit (IMU) of the device. Thus, in various implementations, determining the second predicted device pose is based on data received from an IMU of the device and determining the second predicted object pose is based on data received from a different IMU of a different device.

In various implementations, warping the virtual content is based on a difference between the first predicted object pose and the second predicted object pose. In various implementations, warping the virtual content is further based on a difference between the first predicted device pose and the second device object pose.

In various implementations, warping the virtual content includes performing a homographic transformation of the virtual content. In various implementations, warping the virtual content includes shifting the virtual content. In various implementations, warping the virtual content includes scaling the virtual content.

In various implementations, the method 400 further includes generating a stencil indicating portions of the virtual content to be warped based on the second predicted object pose and warping the virtual content is further based on the stencil. In various implementations, the stencil indicates portions of the virtual content to be warped based on the second predicted device pose independent of the second predicted object pose. In various implementations, the stencil further indicates portions of the virtual content that are not to be warped.

The method 400 continues, in block 460, with the device displaying, on the display at the display time, the warped virtual content.

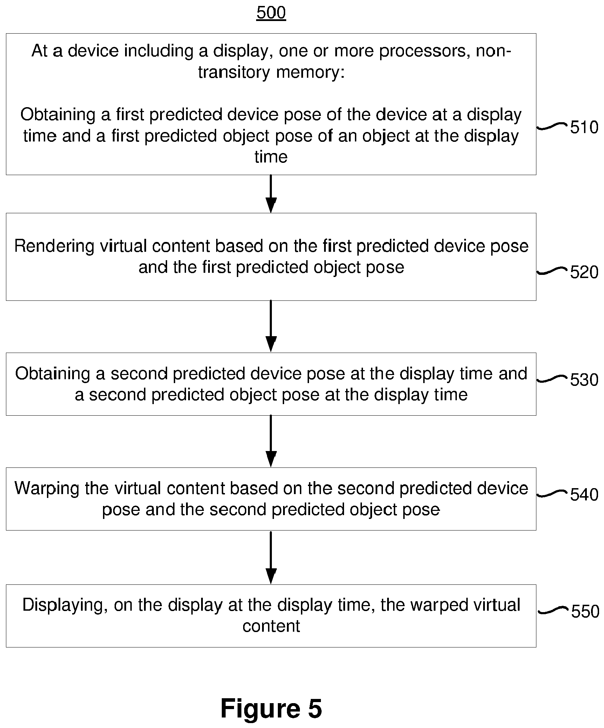

Figure 5 is a flowchart representation of another method 500 of displaying an image in accordance with some implementations. In various implementations, the method 500 is performed by an electronic device, such as the electronic device 120 of Figure 1 or the electronic device 300 of Figure 3. In various implementations, the method 500 is performed by a device with an image sensor, a display, one or more processors, and non-transitory memory. In some implementations, the method 500 is performed by processing logic, including hardware, firmware, software, or a combination thereof. In some implementations, the method 500 is performed by a processor executing instructions (e.g., code) stored in a non-transitory computer-readable medium (e.g., a memory).

The method 500 begins, in block 510, with the device obtaining a first predicted device pose of the device at a display time and a first predicted object pose of an object at the display time. In various implementations, the object is a dynamic object in the physical environment. In various implementations, the object is a hand of a user of the device. In various implementations, the object is the face of a person (other than the user of the device).

In various implementations, obtaining the first predicted device pose is based on data received from an inertial measurement unit (IMU) of the device. In various implementations, obtaining the first predicted object pose is based on an image of the object. In various implementations, obtaining the first predicted object pose includes performing a hand tracking algorithm on the image. In various implementations, obtaining the first predicted object pose includes performing a face detection algorithm on the image. In various implementations, obtaining the first predicted object pose is based on the image and previously obtained images. Thus, in various implementations, obtaining the first predicted object pose includes determining a current object pose at various times based on the previously obtained images and the image and extrapolating the current object poses to predict the first predicted object pose at the display time.

The method 500 continues, in block 520, with the device rendering virtual content based on the first predicted device pose and the first predicted object pose.

The method 500 continues, in block 530, with the device obtaining a second predicted device pose of the device at the display time and a second predicted object pose of the object at the display time. In various implementations, obtaining the second predicted device pose and the second predicted object pose is performed after rendering the virtual content or at least after rendering the virtual content has begun.

In various implementations, obtaining the second predicted object pose is based on an additional image. For example, in various implementations, obtaining the second predicted object pose includes determining a current object pose at various times based on the previously obtained images, the image, and the additional image and extrapolating the current object poses to predict the second predicted object pose at the display time.

In various implementations, the image is captured at a first capture rate and the additional image is captured at a second capture rate higher than the first capture rate. In various implementations, the additional image has a lower resolution than the image.

In various implementations, obtaining the second predicted device pose is based on data received from an inertial measurement unit (IMU) of the device. In various implementations, obtaining the second predicted object pose is based on data received from a different inertial measurement unit (IMU) of a different device. For example, in various implementations, the data is received from the IMU of a watch worn by the user. As another example, in various implementations, the data is received from the IMU of a stylus held by the user. As another example, in various implementations, the data is received from the IMU of a head-mounted device worn by the person (other than the user). In various implementations, the image is captured at a capture rate and the data is received at a reception rate higher than the capture rate.

The method 500 continues, in block 540, with the device warping the virtual content based on the second predicted device pose and the second predicted object pose. In various implementations, warping the virtual content is based on a difference between the first predicted device pose and the second device object pose and a difference between the first predicted object pose and the second predicted object pose.

In various implementations, warping the virtual content includes performing a homographic transformation of the virtual content. In various implementations, warping the virtual content includes shifting the virtual content. In various implementations, warping the virtual content includes scaling the virtual content.

In various implementations, the method 500 further includes generating a stencil indicating portions of the virtual content to be warped based on the second predicted device pose and the second predicted object pose and warping the virtual content is further based on the stencil. In various implementations, the stencil indicates portions of the virtual content to be warped based on the second predicted device pose independent of the second predicted object pose. In various implementations, the stencil further indicates portions of the virtual content that are not to be warped.

Thus, in various implementations, warping the virtual content includes warping a first portion of the virtual content based on the second predicted device pose and the second predicted object pose and warping a second portion of the virtual content based on the second predicted device pose independent of the second predicted object pose.

The method 500 continues, in block 550, with the device displaying, on the display at the display time, the warped virtual content.

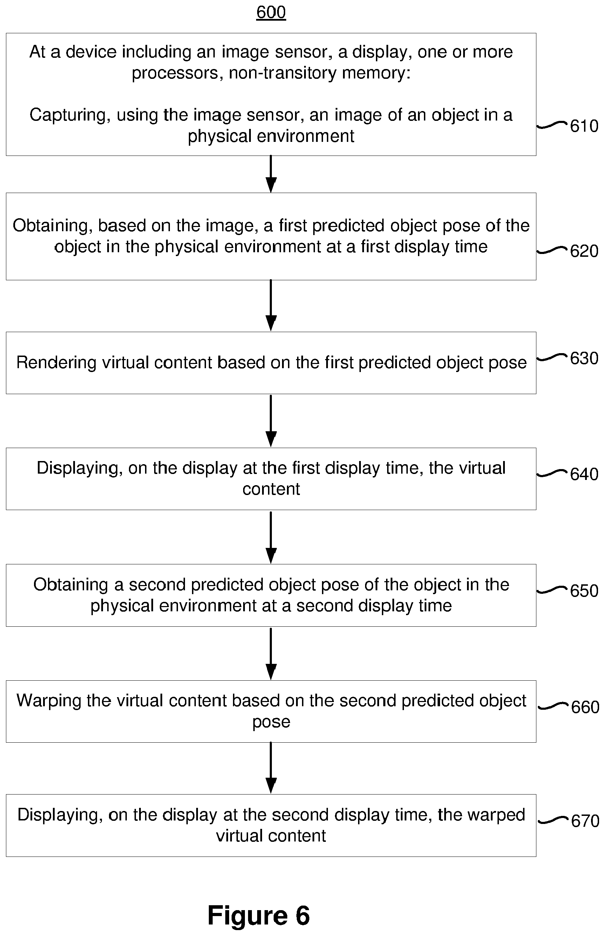

Figure 6 is a flowchart representation of a method 600 of extrapolating an image in accordance with some implementations. In various implementations, the method 600 is performed by an electronic device, such as the electronic device 120 of Figure 1 or the electronic device 300 of Figure 3. In various implementations, the method 600 is performed by a device with an image sensor, a display, one or more processors, and non-transitory memory. In some implementations, the method 600 is performed by processing logic, including hardware, firmware, software, or a combination thereof. In some implementations, the method 400 is performed by a processor executing instructions (e.g., code) stored in a non-transitory computer-readable medium (e.g., a memory).

The method 600 begins, in block 610, with the device capturing, using the image sensor, an image of an object in a physical environment. In various implementations, the object is a dynamic object in the physical environment. In various implementations, the object is a hand of a user of the device. In various implementations, the object is the face of a person (other than the user of the device).

The method 600 continues, in block 620, with the device obtaining, based on the image, a first predicted object pose of the object in the physical environment at a first display time. In various implementations, obtaining the first predicted object pose includes performing a hand tracking algorithm on the image. In various implementations, obtaining the first predicted object pose includes performing a face detection algorithm on the image. In various implementations, obtaining the first predicted object pose is based on the image and previously obtained images. Thus, in various implementations, obtaining the first predicted object pose includes determining a current object pose at various times based on the previously obtained images and the image and extrapolating the current object poses to predict the first predicted object pose at the display time.

The method 600 continues, in block 630, with the device rendering virtual content based on the first predicted object pose. In various implementations, the method 600 further includes obtaining a first predicted device pose of the device in the physical environment at the first display time. In various implementations, rendering the virtual content is further based on the first predicted device pose.

The method 600 continues, in block 640, with the device displaying, on the display at the first display time, the virtual content. In various implementations, the virtual content is warped based on an updated predicted object pose of the object at the first display time and/or an updated predicted device pose of the device of the first display time as described above with respect to Figures 4 and 5.

The method 600 continues, in block 650, with the device obtaining a second predicted object pose of the object in the physical environment at a second display time. In various implementations, obtaining the second predicted object pose is performed after rendering the virtual content or at least after rendering the virtual content has begun.

In various implementations, obtaining the second predicted object pose is based on an additional image. For example, in various implementations, obtaining the second predicted object pose includes determining a current object pose at various times based on the previously obtained images, the image, and the additional image and extrapolating the current object poses to predict the second predicted object pose at the display time.

In various implementations, the image is captured at a first capture rate and the additional image is captured at a second capture rate higher than the first capture rate. In various implementations, the additional image has a lower resolution than the image.

In various implementations, obtaining the second predicted object pose is based on data received from an inertial measurement unit (IMU). For example, in various implementations, the data is received from the IMU of a watch worn by the user. As another example, in various implementations, the data is received from the IMU of a stylus held by the user. As another example, in various implementations, the data is received from the IMU of a head-mounted device worn by the person (other than the user). In various implementations, the image is captured at a capture rate and the data is received at a reception rate higher than the capture rate.

The method 600 continues, in block 660, with the device warping the virtual content based on the second predicted object pose. In various implementations, the method 600 includes obtaining a second predicted device pose of the device at the second display time and the virtual content is further based on the second predicted device pose. In various implementations, obtaining the second predicted device pose is based on data received from an inertial measurement unit (IMU) of the device. Thus, in various implementations, determining the second predicted device pose is based on data received from an IMU of the device and determining the second predicted object pose is based on data received from a different IMU of a different device.

In various implementations, warping the virtual content is based on a difference between the first predicted object pose and the second predicted object pose. In various implementations, warping the virtual content is further based on a difference between the first predicted device pose and the second device object pose.

In various implementations, warping the virtual content includes performing a homographic transformation of the virtual content. In various implementations, warping the virtual content includes shifting the virtual content. In various implementations, warping the virtual content includes scaling the virtual content.

In various implementations, the method 600 further includes generating a stencil indicating portions of the virtual content to be warped based on the second predicted object pose and warping the virtual content is further based on the stencil. In various implementations, the stencil indicates portions of the virtual content to be warped based on the second predicted device pose independent of the second predicted object pose. In various implementations, the stencil further indicates portions of the virtual content that are not to be warped.

The method 600 continues, in block 670, with the device displaying, on the display at the second display time, the warped virtual content.

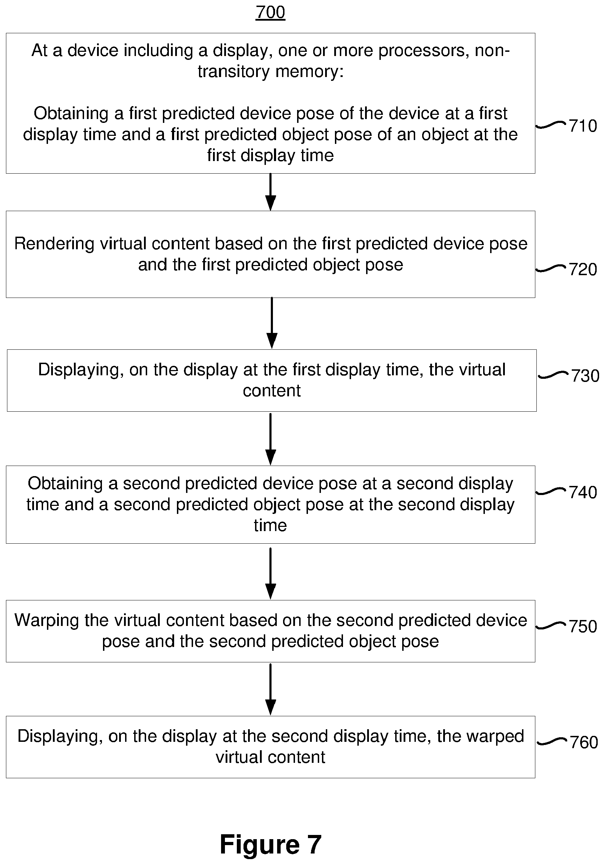

Figure 7 is a flowchart representation of another method 700 of extrapolating an image in accordance with some implementations. In various implementations, the method 700 is performed by an electronic device, such as the electronic device 120 of Figure 1 or the electronic device 300 of Figure 3. In various implementations, the method 700 is performed by a device with an image sensor, a display, one or more processors, and non-transitory memory. In some implementations, the method 700 is performed by processing logic, including hardware, firmware, software, or a combination thereof. In some implementations, the method 700 is performed by a processor executing instructions (e.g., code) stored in a non-transitory computer-readable medium (e.g., a memory).

The method 700 begins, in block 710, with the device obtaining a first predicted device pose of the device at a first display time and a first predicted object pose of an object at the first display time. In various implementations, the object is a dynamic object in the physical environment. In various implementations, the object is a hand of a user of the device. In various implementations, the object is the face of a person (other than the user of the device).

In various implementations, obtaining the first predicted device pose is based on data received from an inertial measurement unit (IMU) of the device. In various implementations, obtaining the first predicted object pose is based on an image of the object. In various implementations, obtaining the first predicted object pose includes performing a hand tracking algorithm on the image. In various implementations, obtaining the first predicted object pose includes performing a face detection algorithm on the image. In various implementations, obtaining the first predicted object pose is based on the image and previously obtained images. Thus, in various implementations, obtaining the first predicted object pose includes determining a current object pose at various times based on the previously obtained images and the image and extrapolating the current object poses to predict the first predicted object pose at the display time.

The method 700 continues, in block 720, with the device rendering virtual content based on the first predicted device pose and the first predicted object pose.

The method 700 continues, in block 730, with the device displaying, on the display at the first display time, the virtual content. In various implementations, the virtual content is warped based on an updated predicted object pose of the object at the first display time and/or an updated predicted device pose of the device of the first display time as described above with respect to Figures 4 and 5.

The method 700 continues, in block 740, with the device obtaining a second predicted device pose of the device at a second display time and a second predicted object pose of the object at the second display time. In various implementations, obtaining the second predicted device pose and the second predicted object pose is performed after rendering the virtual content or at least after rendering the virtual content has begun.

In various implementations, obtaining the second predicted object pose is based on an additional image. For example, in various implementations, obtaining the second predicted object pose includes determining a current object pose at various times based on the previously obtained images, the image, and the additional image and extrapolating the current object poses to predict the second predicted object pose at the display time.

In various implementations, the image is captured at a first capture rate and the additional image is captured at a second capture rate higher than the first capture rate. In various implementations, the additional image has a lower resolution than the image.

In various implementations, obtaining the second predicted device pose is based on data received from an inertial measurement unit (IMU) of the device. In various implementations, obtaining the second predicted object pose is based on data received from a different inertial measurement unit (IMU) of a different device. For example, in various implementations, the data is received from the IMU of a watch worn by the user. As another example, in various implementations, the data is received from the IMU of a stylus held by the user. As another example, in various implementations, the data is received from the IMU of a head-mounted device worn by the person (other than the user). In various implementations, the image is captured at a capture rate and the data is received at a reception rate higher than the capture rate.

The method 700 continues, in block 750, with the device warping the virtual content based on the second predicted device pose and the second predicted object pose. In various implementations, warping the virtual content is based on a difference between the first predicted device pose and the second device object pose and a difference between the first predicted object pose and the second predicted object pose.

In various implementations, warping the virtual content includes performing a homographic transformation of the virtual content. In various implementations, warping the virtual content includes shifting the virtual content. In various implementations, warping the virtual content includes scaling the virtual content.

In various implementations, the method 700 further includes generating a stencil indicating portions of the virtual content to be warped based on the second predicted device pose and the second predicted object pose and warping the virtual content is further based on the stencil. In various implementations, the stencil indicates portions of the virtual content to be warped based on the second predicted device pose independent of the second predicted object pose. In various implementations, the stencil further indicates portions of the virtual content that are not to be warped.

Thus, in various implementations, warping the virtual content includes warping a first portion of the virtual content based on the second predicted device pose and the second predicted object pose and warping a second portion of the virtual content based on the second predicted device pose independent of the second predicted object pose.

The method 700 continues, in block 760, with the device displaying, on the display at the second display time, the warped virtual content.

Figure 8 is a block diagram of an example of the controller 110 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the controller 110 includes one or more processing units 802 (e.g., microprocessors, application-specific integrated-circuits (ASICs), field-programmable gate arrays (FPGAs), graphics processing units (GPUs), central processing units (CPUs), processing cores, and/or the like), one or more input/output (I/O) devices 806, one or more communication interfaces 808 (e.g., universal serial bus (USB), FIREWIRE, THUNDERBOLT, IEEE 802.3x, IEEE 802.11x, IEEE 802.16x, global system for mobile communications (GSM), code division multiple access (CDMA), time division multiple access (TDMA), global positioning system (GPS), infrared (IR), BLUETOOTH, ZIGBEE, and/or the like type interface), one or more programming (e.g., I/O) interfaces 810, a memory 820, and one or more communication buses 804 for interconnecting these and various other components.

In some implementations, the one or more communication buses 804 include circuitry that interconnects and controls communications between system components. In some implementations, the one or more I/O devices 806 include at least one of a keyboard, a mouse, a touchpad, a joystick, one or more microphones, one or more speakers, one or more image sensors, one or more displays, and/or the like.

The memory 820 includes high-speed random-access memory, such as dynamic random-access memory (DRAM), static random-access memory (SRAM), double-data-rate random-access memory (DDR RAM), or other random-access solid-state memory devices. In some implementations, the memory 820 includes non-volatile memory, such as one or more magnetic disk storage devices, optical disk storage devices, flash memory devices, or other non-volatile solid-state storage devices. The memory 820 optionally includes one or more storage devices remotely located from the one or more processing units 802. The memory 820 comprises a non-transitory computer readable storage medium. In some implementations, the memory 820 or the non-transitory computer readable storage medium of the memory 820 stores the following programs, modules and data structures, or a subset thereof including an optional operating system 830 and an XR experience module 840.

The operating system 830 includes procedures for handling various basic system services and for performing hardware dependent tasks. In some implementations, the XR experience module 840 is configured to manage and coordinate one or more XR experiences for one or more users (e.g., a single XR experience for one or more users, or multiple XR experiences for respective groups of one or more users). To that end, in various implementations, the XR experience module 840 includes a data obtaining unit 842, a tracking unit 844, a coordination unit 846, and a data transmitting unit 848.

In some implementations, the data obtaining unit 842 is configured to obtain data (e.g., presentation data, interaction data, sensor data, location data, etc.) from at least the electronic device 120 of Figure 1. To that end, in various implementations, the data obtaining unit 842 includes instructions and/or logic therefor, and heuristics and metadata therefor.

In some implementations, the tracking unit 844 is configured to map the physical environment 105 and to track the position/location of at least the electronic device 120 with respect to the physical environment 105 of Figure 1. To that end, in various implementations, the tracking unit 844 includes instructions and/or logic therefor, and heuristics and metadata therefor.

In some implementations, the coordination unit 846 is configured to manage and coordinate the XR experience presented to the user by the electronic device 120. To that end, in various implementations, the coordination unit 846 includes instructions and/or logic therefor, and heuristics and metadata therefor.

In some implementations, the data transmitting unit 848 is configured to transmit data (e.g., presentation data, location data, etc.) to at least the electronic device 120. To that end, in various implementations, the data transmitting unit 848 includes instructions and/or logic therefor, and heuristics and metadata therefor.

Although the data obtaining unit 842, the tracking unit 844, the coordination unit 846, and the data transmitting unit 848 are shown as residing on a single device (e.g., the controller 110), it should be understood that in other implementations, any combination of the data obtaining unit 842, the tracking unit 844, the coordination unit 846, and the data transmitting unit 848 may be located in separate computing devices.

Moreover, Figure 8 is intended more as functional description of the various features that may be present in a particular implementation as opposed to a structural schematic of the implementations described herein. As recognized by those of ordinary skill in the art, items shown separately could be combined and some items could be separated. For example, some functional modules shown separately in Figure 8 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

Figure 9 is a block diagram of an example of the electronic device 120 in accordance with some implementations. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the electronic device 120 includes one or more processing units 902 (e.g., microprocessors, ASICs, FPGAs, GPUs, CPUs, processing cores, and/or the like), one or more input/output (I/O) devices and sensors 906, one or more communication interfaces 908 (e.g., USB, FIREWIRE, THUNDERBOLT, IEEE 802.3x, IEEE 802.11x, IEEE 802.16x, GSM, CDMA, TDMA, GPS, IR, BLUETOOTH, ZIGBEE, and/or the like type interface), one or more programming (e.g., I/O) interfaces 910, one or more XR displays 912, one or more optional interior- and/or exterior-facing image sensors 914, a memory 920, and one or more communication buses 904 for interconnecting these and various other components.

In some implementations, the one or more communication buses 904 include circuitry that interconnects and controls communications between system components. In some implementations, the one or more I/O devices and sensors 906 include at least one of an inertial measurement unit (IMU), an accelerometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), and/or the like.

In some implementations, the one or more XR displays 912 are configured to provide the XR experience to the user. In some implementations, the one or more XR displays 912 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), fieldemission display (FED), quantum-dot light-emitting diode (QD-LED), micro-electromechanical system (MEMS), and/or the like display types. In some implementations, the one or more XR displays 912 correspond to diffractive, reflective, polarized, holographic, etc. waveguide displays. For example, the electronic device 120 includes a single XR display. In another example, the electronic device includes an XR display for each eye of the user. In some implementations, the one or more XR displays 912 are capable of presenting MR and VR content.

In some implementations, the one or more image sensors 914 are configured to obtain image data that corresponds to at least a portion of the face of the user that includes the eyes of the user (any may be referred to as an eye-tracking camera). In some implementations, the one or more image sensors 914 are configured to be forward-facing so as to obtain image data that corresponds to the physical environment as would be viewed by the user if the electronic device 120 was not present (and may be referred to as a scene camera). The one or more optional image sensors 914 can include one or more RGB cameras (e.g., with a complimentary metal-oxide-semiconductor (CMOS) image sensor or a charge-coupled device (CCD) image sensor), one or more infrared (IR) cameras, one or more event-based cameras, and/or the like.

The memory 920 includes high-speed random-access memory, such as DRAM, SRAM, DDR RAM, or other random-access solid-state memory devices. In some implementations, the memory 920 includes non-volatile memory, such as one or more magnetic disk storage devices, optical disk storage devices, flash memory devices, or other non-volatile solid-state storage devices. The memory 920 optionally includes one or more storage devices remotely located from the one or more processing units 902. The memory 920 comprises a non-transitory computer readable storage medium. In some implementations, the memory 920 or the non-transitory computer readable storage medium of the memory 920 stores the following programs, modules and data structures, or a subset thereof including an optional operating system 930 and an XR presentation module 940.

The operating system 930 includes procedures for handling various basic system services and for performing hardware dependent tasks. In some implementations, the XR presentation module 940 is configured to present XR content to the user via the one or more XR displays 912. To that end, in various implementations, the XR presentation module 940 includes a data obtaining unit 942, a warping unit 944, an XR presenting unit 946, and a data transmitting unit 948.

In some implementations, the data obtaining unit 942 is configured to obtain data (e.g., presentation data, interaction data, sensor data, location data, etc.) from at least the controller 110 of Figure 1. To that end, in various implementations, the data obtaining unit 942 includes instructions and/or logic therefor, and heuristics and metadata therefor.

In some implementations, the warping unit 944 is configured to warp content based on an updated predicted pose of an object. To that end, in various implementations, the warping unit 944 includes instructions and/or logic therefor, and heuristics and metadata therefor.

In some implementations, the XR presenting unit 946 is configured to display the warped image via the one or more XR displays 912. To that end, in various implementations, the XR presenting unit 946 includes instructions and/or logic therefor, and heuristics and metadata therefor.

In some implementations, the data transmitting unit 948 is configured to transmit data (e.g., presentation data, location data, etc.) to at least the controller 110. In some implementations, the data transmitting unit 948 is configured to transmit authentication credentials to the electronic device. To that end, in various implementations, the data transmitting unit 948 includes instructions and/or logic therefor, and heuristics and metadata therefor.

Although the data obtaining unit 942, the warping unit 944, the XR presenting unit 946, and the data transmitting unit 948 are shown as residing on a single device (e.g., the electronic device 120), it should be understood that in other implementations, any combination of the data obtaining unit 942, the warping unit 944, the XR presenting unit 946, and the data transmitting unit 948 may be located in separate computing devices.

Moreover, Figure 9 is intended more as a functional description of the various features that could be present in a particular implementation as opposed to a structural schematic of the implementations described herein. As recognized by those of ordinary skill in the art, items shown separately could be combined and some items could be separated. For example, some functional modules shown separately in Figure 9 could be implemented in a single module and the various functions of single functional blocks could be implemented by one or more functional blocks in various implementations. The actual number of modules and the division of particular functions and how features are allocated among them will vary from one implementation to another and, in some implementations, depends in part on the particular combination of hardware, software, and/or firmware chosen for a particular implementation.

As described above, one aspect of the present technology is the gathering and use of data available from various sources to improve content registration between virtual content and dynamic objects. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to improve content registration between virtual content and a person's face and/or hand. Further, other uses for personal information data that benefit the user are also contemplated by the present disclosure. For instance, health and fitness data may be used to provide insights into a user's general wellness, or may be used as positive feedback to individuals using technology to pursue wellness goals.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdictionspecific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of content registration, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, virtual content can be displayed over a person's face and/or hand based on non-personal information data or a bare minimum amount of personal information, such as the content being requested by the device associated with a user, other non-personal information available to the electronic device, or publicly available information.

While various aspects of implementations within the scope of the appended claims are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary embodiments of the present disclosure are set out in the following items:
1. A method comprising:
   at a device including an image sensor, a display, one or more processors, and non-transitory memory:
   capturing, using the image sensor, an image of an object in a physical environment;
   obtaining, based on the image, a first predicted object pose of the object in the physical environment at a display time;
   rendering virtual content based on the first predicted object pose;
   obtaining a second predicted object pose of the object in the physical environment at the display time;
   warping the virtual content based on the second predicted object pose; and
   displaying, on the display at the display time, the warped virtual content.
2. The method of item 1, wherein the object is a dynamic object in the physical environment.
3. The method of item 2, wherein the object is a hand of a user of the device.
4. The method of item 2, wherein the object is the face of a person.
5. The method of any of items 1-4, wherein obtaining the second predicted object pose is based on an additional image of the object.
6. The method of any of items 1-5, wherein obtaining the second predicted object pose is based on data received from an inertial measurement unit.
7. The method of any of items 1-6, wherein warping the virtual content is based on a difference between the first predicted object pose and the second predicted object pose.
8. The method of any of items 1-7, wherein warping the virtual content includes performing a homographic transformation of the virtual content.
9. The method of any of items 1-8, wherein warping the virtual content includes shifting the virtual content.
10. The method of any of items 1-9, further comprising generating a stencil indicating portions of the virtual content to be warped based on the second predicted object pose, wherein warping the virtual content is further based on the stencil.
11. The method of item 10, wherein the stencil further indicates portions of the virtual content that are not to be warped.
12. The method of any of items 1-11, further comprising:
   obtaining a first predicted device pose of the device at the display time, wherein rendering the virtual content is based on a first predicted device pose, and
   after rendering the virtual content, obtaining a second predicted device pose of the device at the display time, wherein warping the virtual content is based on the second predicted device pose.
13. The method of item 12, wherein obtaining the second predicted device pose is based on data received from an inertial measurement unit of the device.
14. A device comprising:
   an image sensor;
   a display;
   a non-transitory memory; and
   one or more processors to:
      capture, using the image sensor, an image of an object in a physical environment;
      obtain, based on the image, a first predicted object pose of the object in the physical environment at a display time;
      render virtual content based on the first predicted object pose;
      obtain a second predicted object pose of the object in the physical environment at the display time;
      warp the virtual content based on the second predicted object pose; and
      display, on the display at the display time, the warped virtual content.
15. A device comprising:
   an image sensor;
   a display
   one or more processors;
   non-transitory memory; and
   one or more programs stored in the non-transitory memory, which, when executed by the one or more processors, cause the device to perform any of the methods of items 1-13.
16. A non-transitory memory storing one or more programs, which, when executed by one or more processors of a device including an image sensor and a display, cause the device to perform any of the methods of items 1-13.
17. A device comprising:
   an image sensor;
   a display;
   one or more processors;
   a non-transitory memory; and
   means for causing the device to perform any of the methods of items 1-13.
18. A method comprising:
   at a device including a display, one or more processors, and non-transitory memory:
   obtaining a first predicted device pose of the device at a display time and a first predicted object pose of an object at the display time;
   rendering virtual content based on the first predicted device pose and the first predicted object pose;
   obtaining a second predicted device pose of the device at the display time and a second predicted object pose of the object at the display time;
   warping the virtual content based on the second predicted device pose and the second predicted object pose; and
   displaying, on the display at the display time, the warped virtual content.
19. The method of item 18, wherein the object is a dynamic object in the physical environment.
20. The method of item 19, wherein the object is a hand of a user.
21. The method of item 19, wherein the object is the face of a person.
22. The method of any of items 18-21, wherein obtaining the second predicted object pose is based on an additional image of the object.
23. The method of any of items 18-22, wherein obtaining the second predicted device pose is based on data received from an inertial measurement unit of the device.
24. The method of item 23, wherein obtaining the second predicted object pose is based on data received from a different inertial measurement unit of a different device.
25. The method of any of items 18-24, wherein warping the virtual content is based on a difference between the first predicted device pose and the second predicted device pose and a difference between the first predicted object pose and the second predicted object pose.
26. The method of any of items 18-25, wherein warping the virtual content includes performing a homographic transformation of the virtual content.
27. The method of any of items 18-26, wherein warping the virtual content includes shifting the virtual content.
28. The method of any of items 18-27, wherein warping the virtual content includes warping a first portion of the virtual content based on the second predicted device pose and the second predicted object pose and warping a second portion of the virtual content based on the second predicted device pose independent of the second predicted object pose.
29. The method of any of items 18-28, further comprising generating a stencil indicating portions of the virtual content to be warped based on the second predicted object pose, wherein warping the virtual content is further based on the stencil.
30. The method of item 29, wherein the stencil further indicates portions of the virtual content to be warped based on the second predicted device pose independent of the second predicted object pose.
31. The method of item 29 or 30, wherein the stencil further indicates portions of the virtual content that are not to be warped.
32. A device comprising:
   a display;
   a non-transitory memory; and
   one or more processors to:
      obtain a first predicted device pose of the device at a display time and a first predicted object pose of an object at the display time;
      render virtual content based on the first predicted device pose and the first predicted object pose;
      obtain a second predicted device pose of the device at the display time and a second predicted object pose of the object at the display time;
      warp the virtual content based on the second predicted device pose and the second predicted object pose; and
      display, on the display at the display time, the warped virtual content.
33. A device comprising:
   a display
   one or more processors;
   non-transitory memory; and
   one or more programs stored in the non-transitory memory, which, when executed by the one or more processors, cause the device to perform any of the methods of items 18-31.
34. A non-transitory memory storing one or more programs, which, when executed by one or more processors of a device including a display, cause the device to perform any of the methods of items 18-31.
35. A device comprising:
   a display;
   one or more processors;
   a non-transitory memory; and
   means for causing the device to perform any of the methods of items 18-31.
36. A method comprising:
   at a device including an image sensor, a display, one or more processors, and non-transitory memory:
   capturing, using the image sensor, an image of an object in a physical environment;
   obtaining, based on the image, a first predicted object pose of the object at a first display time;
   rendering virtual content based on the first predicted object pose;
   displaying, at the first display time, the virtual content;
   obtaining a second predicted object pose of the object at a second display time subsequent to the first display time;
   warping the virtual content based on the second predicted object pose; and
   displaying, at the second display time, the warped virtual content.
37. The method of item 36, wherein the object is a dynamic object in the physical environment.
38. The method of item 37, wherein the object is a hand of a user of the device.
39. The method of item 37, wherein the object is the face of a person.
40. The method of any of items 36-39, wherein obtaining the second predicted object pose is based on an additional image of the object.
41. The method of any of items 36-40, wherein obtaining the second predicted object pose is based on data received from an inertial measurement unit.
42. The method of any of items 36-41, wherein warping the virtual content is based on a difference between the first predicted object pose and the second predicted object pose.
43. The method of any of items 36-42, wherein warping the virtual content includes performing a homographic transformation of the virtual content.
44. The method of any of items 36-43, wherein warping the virtual content includes shifting the virtual content.
45. The method of any of items 36-44, further comprising generating a stencil indicating portions of the virtual content to be warped based on the second predicted object pose, wherein warping the virtual content is further based on the stencil.
46. The method of item 45, wherein the stencil further indicates portions of the virtual content that are not to be warped.
47. The method of any of items 36-46, further comprising:
   obtaining a first predicted device pose of the device at the first display time, wherein rendering the virtual content is based on the first predicted device pose, and
   after rendering the virtual content, obtaining a second predicted device pose of the device at the second display time, wherein warping the virtual content is based on the second predicted device pose.
48. The method of item 47, wherein obtaining the second predicted device pose is based on data received from an inertial measurement unit of the device.
49. A device comprising:
   an image sensor;
   a display;
   a non-transitory memory; and
   one or more processors to:
      capture, using the image sensor, an image of an object in a physical environment;
      obtain, based on the image, a first predicted object pose of the object at a first display time;
      render virtual content based on the first predicted object pose;
      display, at the first display time, the virtual content;
      obtain a second predicted object pose of the object at a second display time subsequent to the first display time;
      warp the virtual content based on the second predicted object pose; and
      display, at the second display time, the warped virtual content.
50. A device comprising:
   an image sensor;
   a display;
   one or more processors;
   non-transitory memory; and
   one or more programs stored in the non-transitory memory, which, when executed by the one or more processors, cause the device to perform any of the methods of items 36-48.
51. A non-transitory memory storing one or more programs, which, when executed by one or more processors of a device including an image sensor and a display, cause the device to perform any of the methods of items 36-48.
52. A device comprising:
   an image sensor;
   a display;
   one or more processors;
   a non-transitory memory; and
   means for causing the device to perform any of the methods of items 36-48.
53. A method comprising:
   at a device including a display, one or more processors, and non-transitory memory:
   obtaining a first predicted device pose of the device at a first display time and a first predicted object pose of an object at the first display time;
   rendering virtual content based on the first predicted device pose and the first predicted object pose;
   displaying, on the display at the first display time, the virtual content;
   obtaining a second predicted device pose of the device at a second display time and a second predicted object pose of the object at the second display time;
   warping the virtual content based on the second predicted device pose and the second predicted object pose; and
   displaying, on the display at the second display time, the warped virtual content.
54. The method of item 53, wherein the object is a dynamic object in the physical environment.
55. The method of item 54, wherein the object is a hand of a user.
56. The method of item 54, wherein the object is the face of a person.
57. The method of any of items 53-56, wherein obtaining the second predicted object pose is based on an additional image of the object.
58. The method of any of items 53-57, wherein obtaining the second predicted device pose is based on data received from an inertial measurement unit of the device.
59. The method of item 58, wherein obtaining the second predicted object pose is based on data received from a different inertial measurement unit of a different device.
60. The method of any of items 53-59, wherein warping the virtual content is based on a difference between the first predicted device pose and the second predicted device pose and a difference between the first predicted object pose and the second predicted object pose.
61. The method of any of items 53-60, wherein warping the virtual content includes performing a homographic transformation of the virtual content.
62. The method of any of items 53-61, wherein warping the virtual content includes shifting the virtual content.
63. The method of any of items 53-62, wherein warping the virtual content includes warping a first portion of the virtual content based on the second predicted device pose and the second predicted object pose and warping a second portion of the virtual content based on the second predicted device pose independent of the second predicted object pose.
64. The method of any of items 53-63, further comprising generating a stencil indicating portions of the virtual content to be warped based on the second predicted object pose, wherein warping the virtual content is further based on the stencil.
65. The method of item 64, wherein the stencil further indicates portions of the virtual content to be warped based on the second predicted device pose independent of the second predicted object pose.
66. The method of item 64 or 65, wherein the stencil further indicates portions of the virtual content that are not to be warped.
67. A device comprising:
   a display;
   a non-transitory memory; and
   one or more processors to:
      obtain a first predicted device pose of the device at a first display time and a first predicted object pose of an object at the first display time;
      render virtual content based on the first predicted device pose and the first predicted object pose;
      display, on the display at the first display time, the virtual content;
      obtain a second predicted device pose of the device at a second display time and a second predicted object pose of the object at the second display time;
      warp the virtual content based on the second predicted device pose and the second predicted object pose; and
      display, on the display at the second display time, the warped virtual content.
68. A device comprising:
   a display;
   one or more processors;
   non-transitory memory; and
   one or more programs stored in the non-transitory memory, which, when executed by the one or more processors, cause the device to perform any of the methods of items 53-66.
69. A non-transitory memory storing one or more programs, which, when executed by one or more processors of a device including a display, cause the device to perform any of the methods of items 53-66.
70. A device comprising:
   a display;
   one or more processors;
   a non-transitory memory; and
   means for causing the device to perform any of the methods of items 53-66.

## Claims

1. A method comprising:
at a device including an image sensor, a display, one or more processors, and non-transitory memory:
capturing, using the image sensor, an image of an object in a physical environment;
obtaining, based on the image, a first predicted object pose of the object in the physical environment at a display time;
rendering virtual content based on the first predicted object pose;
obtaining a second predicted object pose of the object in the physical environment at the display time;
warping the virtual content based on the second predicted object pose; and
displaying, on the display at the display time, the warped virtual content.

2. The method of claim 1, wherein the object is a dynamic object in the physical environment.

3. The method of claim 2, wherein the object is a hand of a user of the device.

4. The method of claim 2, wherein the object is the face of a person.

5. The method of any of claims 1-4, wherein obtaining the second predicted object pose is based on an additional image of the object.

6. The method of any of claims 1-5, wherein obtaining the second predicted object pose is based on data received from an inertial measurement unit.

7. The method of any of claims 1-6, wherein warping the virtual content is based on a difference between the first predicted object pose and the second predicted object pose.

8. The method of any of claims 1-7, wherein warping the virtual content includes performing a homographic transformation of the virtual content.

9. The method of any of claims 1-8, wherein warping the virtual content includes shifting the virtual content.

10. The method of any of claims 1-9, further comprising generating a stencil indicating portions of the virtual content to be warped based on the second predicted object pose, wherein warping the virtual content is further based on the stencil.

11. The method of claim 10, wherein the stencil further indicates portions of the virtual content that are not to be warped.

12. The method of any of claims 1-11, further comprising:
obtaining a first predicted device pose of the device at the display time, wherein rendering the virtual content is based on a first predicted device pose, and
after rendering the virtual content, obtaining a second predicted device pose of the device at the display time, wherein warping the virtual content is based on the second predicted device pose.

13. The method of claim 12, wherein obtaining the second predicted device pose is based on data received from an inertial measurement unit of the device.

14. A device comprising:
an image sensor;
a display;
a non-transitory memory; and
one or more processors to:
capture, using the image sensor, an image of an object in a physical environment;
obtain, based on the image, a first predicted object pose of the object in the physical environment at a display time;
render virtual content based on the first predicted object pose;
obtain a second predicted object pose of the object in the physical environment at the display time;
warp the virtual content based on the second predicted object pose; and
display, on the display at the display time, the warped virtual content.

15. A non-transitory memory storing one or more programs, which, when executed by one or more processors of a device including an image sensor and a display, cause the device to:
capture, using the image sensor, an image of an object in a physical environment;
obtain, based on the image, a first predicted object pose of the object in the physical environment at a display time;
render virtual content based on the first predicted object pose;
obtain a second predicted object pose of the object in the physical environment at the display time;
warp the virtual content based on the second predicted object pose; and
display, on the display at the display time, the warped virtual content.
